# EUROPEAN PATENT APPLICATION

(11) **EP 3 330 713 A1**
(43) Date of publication of application: **06.06.2018**
(21) Application number: 16201812.1
(22) Date of filing: 01.12.2016
(51) Int. Cl.: G01N 35/00, G01N 35/04, B01L 3/00, B01L 9/06

(54) **LABORATORY HANDLING SYSTEM AND LABORATORY AUTOMATION SYSTEM**

(71) Applicant: Roche Diagnostics GmbH, 68305 Mannheim (DE); F. Hoffmann-La Roche AG, 4070 Basel (CH)
(72) Inventor: Meier, Reto Andrin, 70374 Stuttgart (DE); Scholz, Michael, 71726 Benningen (DE)
(74) Representative: Patentanwälte Ruff, Wilhelm, Beier, Dauster & Partner mbB

(57) **Abstract**

Laboratory handling system (100, 100', 100"), comprising:
- a number of racks (1), wherein a respective rack (1) is adapted to carry a number of laboratory sample containers (2),
- a rack placement unit (3), wherein at least one of the number of racks (1) is placed on the rack placement unit (3),
- a rack sensing unit (4), wherein the rack sensing unit (4) is adapted to sense a position and/or a type of the rack (1) being placed on the rack placement unit (3),
- a handling unit (5), wherein the handling unit (5) is adapted to insert laboratory sample containers (2) in the rack (1) being placed on the rack placement unit (3) or remove laboratory sample containers (2) from the rack (1) being placed on the rack placement unit (3), and
- a control unit (6), wherein the control unit (6) is adapted to control the handling unit (5) in response to the sensed position and/or sensed type of the rack (1) being placed on the rack placement unit (3).

## Description

The invention relates to a laboratory handling system and a laboratory automation system.

So called in-sorters and out-sorters are laboratory handling systems used in laboratory automation systems. The function of an in-sorter or out-sorter is the handling of laboratory sample containers comprising samples to be processed, e.g. by a laboratory station. The in-sorter transfers laboratory sample containers from a container storing position to a sample container transport unit. The sample container transport unit transports the laboratory sample containers to a corresponding laboratory station for processing samples comprised in the laboratory sample containers. The processed samples are transported by the sample container transport unit to the out-sorter. The out-sorter transfers the laboratory sample containers from the sample container transport unit to a storing position.

The laboratory sample containers are often stored in racks, wherein a rack is adapted to store a certain number of laboratory sample containers. The number of laboratory sample containers to be stored depends on the type of the rack. The in-sorter is adapted to remove the laboratory sample containers from a container storing position inside the rack and transfer them to the sample container transport unit. Typically, an empty rack is placed in the out-sorter, wherein laboratory sample containers comprising processed samples are inserted into this rack.

For removing laboratory sample containers from the rack or inserting laboratory sample containers in the rack the in-sorter and out-sorter need to know the position and the type of a rack, i.e. the position and the number of possible storing positions for laboratory sample containers. Thus, according to the prior art, when an in-sorter and an out-sorter are brought into service the type of the rack and possible rack positions have to be transferred to and stored in the sorter for correctly gripping a laboratory sample container.

It is an object of the invention to provide a laboratory handling system and a laboratory automation system having improved properties regarding the prior art.

The invention solves this object by providing a laboratory handling system according claim 1 and a laboratory automation system according claim 8.

The laboratory handling system comprises a number of racks. A respective rack is adapted to carry a number of laboratory sample containers. Reference insofar is made to the corresponding prior art. The number of racks may e.g. be a number in the range of 1 up to 1000. The number of laboratory sample containers carried by the respective rack may e.g. be a number in the range of 2 up to 150.

The laboratory handling system further comprises a rack placement unit. At least one of the number of racks is placed on the rack placement unit. The rack placement unit may comprise a flat metal plate having rack holding elements. The rack holding elements may be adapted to detachably hold at least one of the number of racks being placed on the rack placement unit. The operating principle of racks which are detachably held by rack holding elements is e.g. disclosed in DE 10 2008 058 755 A1.

The laboratory handling system further comprises a rack sensing unit. The rack sensing unit is adapted to sense a position and/or a type of the rack being placed on the rack placement unit. The position of the rack being placed on the rack placement unit may be the localization of the rack e.g. in planar coordinates. The type of the rack being placed on the rack placement unit may define the dimension and/or size of the rack and, additionally, the number and the position of possible storing positions of laboratory sample containers to be carried by the rack. The rack sensing unit may comprise an optical sensor, e.g. in form of a camera, or a magnetic sensor or an electric/electronic sensor. The rack sensing unit may be adapted to analyze the position and/or the type of the rack being sensed and placed on the rack placement unit.

The laboratory handling system further comprises a handling unit. The handling unit is adapted to insert laboratory sample containers in the rack being placed on the rack placement unit. Accordingly, the handling unit is adapted to remove laboratory sample containers from the rack being placed on the rack placement unit. The handling unit may be a gripper.

The laboratory handling system further comprises a control unit, e.g. in form of a Personal Computer or a microprocessor. The control unit is adapted to initiate and/or control the handling unit in response to the sensed position and/or sensed type of the rack being placed on the rack placement unit. The control unit may be functionally coupled to the rack placement unit and/or the rack sensing unit and/or the number of racks and/or the handling unit.

The laboratory sample container is typically designed as a tube made of glass or transparent plastic and typically has an opening at an upper end. The laboratory sample container may be used to contain, store and transport a sample to be processed and/or analyzed such as a blood sample, (blood) serum or plasma sample, a urine sample, separation gel, cruor (blood cells) or a chemical sample. The laboratory sample container may be used to contain, store and transport any kind of biological liquid, for instance.

In an embodiment, the laboratory handling system further comprises a rack coding device comprising or storing a rack code. The rack coding device is assigned to the rack being placed on the rack placement unit. The rack code determines a type of processing of samples being comprised in the laboratory sample containers to be inserted in the rack being placed on the rack placement unit or to be removed from the rack being placed on the rack placement unit. The type of processing may e.g. be a type of analytical process of the sample, e.g. blood analysis or urinalysis. The rack sensing unit is adapted to sense the rack code of the rack coding device assigned to the rack being placed on the rack placement unit.

In an embodiment, the control unit is adapted to control the handling unit in response to the sensed rack code of the rack coding device assigned to the rack being placed on the rack placement unit.

The control unit may be adapted to initiate and/or control the removing of laboratory sample containers from the rack being placed on the rack placement unit. Further, the control unit may be adapted to initiate and/or control the processing of samples being comprised in the laboratory sample containers according to the rack code of the rack being placed on the rack placement unit comprising the laboratory sample containers.

The control unit may be adapted to insert laboratory sample containers comprising a processed sample in a rack being placed on the rack placement unit having the rack code determining the performed process of the samples.

In an embodiment, the rack coding device comprises or is a label or sticker carrying the rack code. The rack code may e.g. be embodied as a QR-code, a barcode, a color, a printed code comprising numbers and/or letters, e.g. provided on the label or sticker. Additionally or alternatively, the rack code may be embodied as a stored code in a memory of the rack coding device.

In an embodiment, the rack coding device comprises an RFID tag. The RFID tag may comprise a memory for storing codes representing the rack code.

In an embodiment, the rack sensing unit comprises a camera and/or an RFID reader.

In an embodiment, the handling unit is a gripper. The gripper may comprise two clamping parts facing each other. The gripper may be adapted to clamp a laboratory sample container to be transported between the two clamping parts facing each other.

In an embodiment, the rack sensing unit is adapted to sense positions of laboratory sample containers located in the rack being placed on the rack placement unit and/or to sense empty inserting positions of the rack being placed on the rack placement unit for inserting laboratory sample containers.

The control unit may be adapted to initiate and/or control the handling unit in response to the sensed position of the laboratory sample containers located in the rack being placed on the rack placement unit. The handling unit may be adapted to remove laboratory sample containers from the rack being placed on the rack placement unit.

The control unit may be adapted to initiate and/or control the handling unit in response to the sensed empty inserting positions of the rack being placed on the rack placement unit for inserting laboratory sample containers. The handling unit may be adapted to insert laboratory sample containers in the rack being placed on the rack placement unit.

The laboratory automation system comprises a number (e.g. 1 to 10) of inventive laboratory handling systems described above. The laboratory automation system further comprises a number (e.g. 1 to 100) of laboratory stations functionally coupled to the respective laboratory handling system. At least one of the laboratory stations is adapted to perform the type of processing of samples being comprised in the laboratory sample containers. The type of processing may be represented by the rack code.

The laboratory stations may be e.g. pre-analytical, analytical and/or post-analytical stations.

Pre-analytical stations may be adapted to perform any kind of pre-processing of samples and/or laboratory sample containers.

Analytical stations may be adapted to use a sample or part of the sample and/or a reagent to generate a measuring signal, the measuring signal indicating if and in which concentration an analyte exists.

Post-analytical stations may be adapted to perform any kind of post-processing of samples and/or sample containers.

The pre-analytical, analytical and/or post-analytical stations may comprise at least one of a decapping station, a recapping station, an aliquot station, a centrifugation station, an archiving station, a pipetting station, a sorting station, a tube type identification station, a sample quality determining station, an add-on buffer station, a liquid level detection station, and a sealing/desealing station.

In an embodiment, the laboratory automation system comprises a sample container transport unit being adapted to transport laboratory sample containers between the number of laboratory stations. The sample container transport unit comprises a number of sample container carriers. The sample container carriers are adapted to receive and carry a sample container. The control unit may be functionally coupled to the sample container transport unit. The control unit may be adapted to initiate and/or control the sample container transport unit. The handling unit may be adapted to insert laboratory sample containers in the sample container carriers of the sample container transport unit and/or may be adapted to remove laboratory sample containers from the sample container carriers of the sample container transport unit.

In an embodiment, the sample container transport unit comprises a conveyor, wherein the sample container carriers are attached to the conveyor.

The conveyor of the sample container transport unit may be a driven belt or chain having attached the sample container carriers for e.g. horizontally transporting laboratory sample containers. The sample container carriers may comprise sample container holding elements in form of a clip or quiver.

The control unit may be adapted to initiate and/or control the handling unit in response to an empty sample container carrier or in response to a laboratory sample container located in a sample container carrier.

For example, when an empty sample container carrier is notified by the control unit, a laboratory sample container is removed from the rack being placed on the rack placement unit and is inserted in the empty sample container carrier by the handling unit controlled by the control unit. Further, the control unit may be adapted to control the sample container transport unit in response to the sensed rack code for transporting the laboratory sample container to a rack code specific laboratory station for processing the sample contained in the laboratory sample container in response to the sensed rack code.

For example, when a laboratory sample container is notified by the control unit, wherein the laboratory sample container comprises a processed sample and is placed in the sample container carrier, the laboratory sample container is removed from the sample container carrier and is inserted in a rack being placed on the rack placement unit and having a rack code corresponding to the performed processing of the sample. The removing from the sample container carrier and the inserting in the rack may be done by the handling unit controlled by the control unit.

The invention will be described in detail with respect to the drawing schematically depicting embodiments of the invention. In detail:
- Fig. 1: schematically depicts a laboratory handling system according to a first embodiment and
- Fig. 2: schematically depicts a laboratory automation system comprising two laboratory handling systems according to a further embodiment.

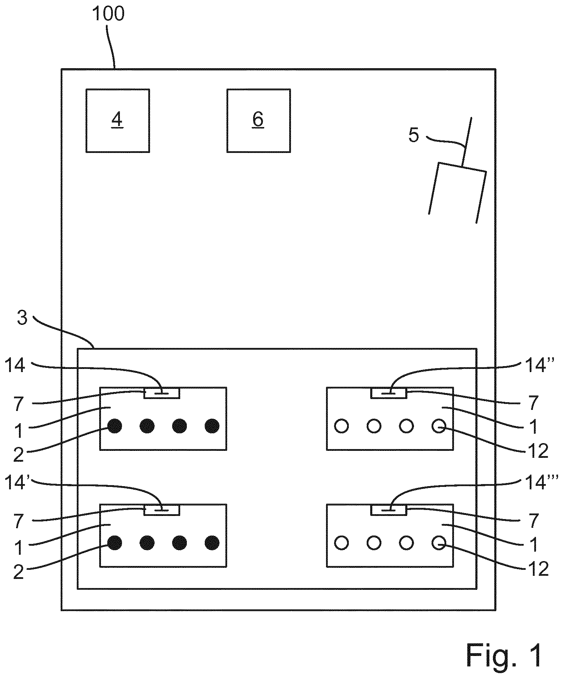

Fig. 1 schematically depicts a laboratory handling system 100 according to a first embodiment. The laboratory handling system 100 comprises four racks 1. Each of the racks 1 has four container storing positions 12 for holding and/or carrying laboratory sample containers 2. Self-evidently, the racks 1 may have more than four storing positions 12, e.g. 40 storing positions 12. Two of the exemplary racks 1 carry laboratory sample containers 2 and the remaining two exemplary racks 1 do not carry laboratory sample containers 2.

Each rack 1 comprises a rack coding device 7 in form of a barcode sticker having a rack code 14, 14', 14" or 14"' in form of a barcode. The barcodes 14, 14', 14", 14'" may be used to identify a unique rack out of the number of racks 1. The barcodes 14, 14', 14", 14'" are used to determine a type of processing of samples being comprised in the laboratory sample containers 2 comprised in the corresponding racks 1.

The rack 1 having the barcode 14 comprises blood samples contained in the laboratory sample containers 2. Thus, the barcode 14 is related to a blood analysis.

The rack 1 having the barcode 14' comprises urine samples contained in the laboratory sample containers 2. Thus, the barcode 14' is related to a urinalysis.

The laboratory handling system 100 further comprises a rack placement unit 3. The four representative racks 1 are placed on the rack placement unit 3 of the laboratory handling system 100. The racks 1 are detachably held by the rack placement unit 3.

The laboratory handling system 100 further comprises a rack sensing unit 4. The rack sensing unit 4 comprises a camera. The camera takes a picture of the rack placement unit 3 together with the racks 1 being placed on the rack placement unit 3. The rack sensing unit 4 is adapted to analyze the picture regarding the positions of the racks 1 being placed on the rack placement unit 3 and the type of the racks 1 being placed on the rack placement unit 3. By means of the rack type analysis geometrical properties of the racks 1 being placed on the rack placement unit 3 are determined, e.g. in form of positions of the corresponding container supports 12 of the racks 1.

The rack sensing unit 4 is further adapted to analyze the picture regarding laboratory sample containers 2 carried by the container supports 12 of the racks 1 being placed on the rack placement unit 3. Thus, empty or occupied container supports 12 are recognized by the rack sensing unit 4.

The rack sensing unit 4 is further adapted to read the barcodes 14, 14', 14", 14"' of the barcode stickers 7 located on the racks 1 being placed on the rack placement unit 3.

The rack coding device 7 may comprise an RFID tag and the rack sensing unit 4 may further comprises an RFID reader to read properties of the RFID tags.

The laboratory handling system 100 further comprises a handling unit 5 in form of a gripper. The gripper 5 is adapted to insert/remove laboratory sample containers 2 in/from the container supports 12 of the racks 1.

The laboratory handling system 100 further comprises a control unit 6 functionally coupled to the rack sensing unit 4 and to the gripper 5. The control unit 6 is supplied with the analyzed positions of the container supports 12 of the racks 1, the carried laboratory sample containers 2 and the barcodes 14, 14', 14", 14'" of the racks 1 being placed on the rack placement unit 3.

The control unit 6 is adapted to control the gripper 5 in response to the determined positions of the carried laboratory sample containers 2 and/or in response to the barcodes 14, 14', 14", 14"'. The gripper 5 is adapted to remove laboratory sample containers 2 from the container supports 12 of the racks 1 being placed on the rack placement unit 3. Further, the gripper 5 is adapted to insert laboratory sample containers 2 in the container supports 12 of the racks 1 being placed on the rack placement unit 3.

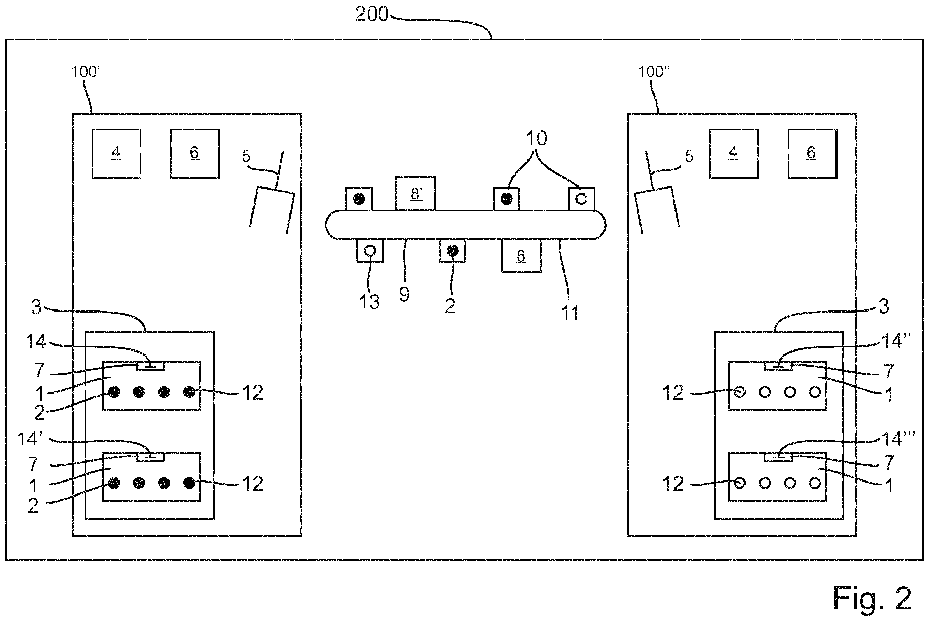

Fig. 2 schematically depicts a laboratory automation system 200. The same reference numbers are used for identical or functionally identical objects already depicted in Fig. 1.

The laboratory automation system 200 comprises a first laboratory station 8 and a second laboratory station 8'. The two laboratory stations 8 and 8' are adapted to perform a specific type of processing of samples being comprised in the laboratory sample containers 2. The first laboratory station 8 is adapted to perform a first analysis, e.g. a blood analysis, and the second laboratory station 8' is adapted to perform a second analysis, e.g. a urinalysis.

The laboratory stations 8 and 8' are functionally coupled to a first laboratory handling system 100' and to a second laboratory handling system 100" by means of a sample container transport unit 9. The sample container transport unit 9 is adapted to transport laboratory sample containers 2 between the laboratory stations 8 and 8' and between the first laboratory handling system 100' and the second laboratory handling system 100".

The sample container transport unit 9 comprises multiple sample container carriers 10 and a conveyor 11 in form of a chain. The sample container carriers 10 are attached to the chain 11. The sample container carriers 10 comprise container supports 13 for holding and/or carrying laboratory sample containers 2. The laboratory sample containers 2 placed in the container supports 13 are transported between the two laboratory stations 8 and 8' and the first laboratory handling system 100' and the second laboratory handling system 100".

The gripper 5 of the first laboratory handling system 100' is adapted to remove laboratory sample containers 2 from the container supports 12 of the racks 1 being placed on the rack placement unit 3 and to insert these laboratory sample containers 2 in the container supports 13 of the sample container carriers 10.

The control unit 6 of the first laboratory handling system 100' is adapted to cause and/or initiate the transport of the laboratory sample containers 2 by the sample container transport unit 9 to at least one of the two laboratory stations 8 and 8' for processing the samples contained in the laboratory sample containers 2 in response to the sensed barcodes 14, 14'. In detail, the control unit 6 initiates and/or controls the transport of the laboratory sample containers 2 from the rack 1 having the barcode 14 to the laboratory station 8 and controls the transport of the laboratory sample containers 2 from the rack 1 having the barcode 14' to the laboratory station 8'.

After the processing of the samples by means of the laboratory stations 8 and/or 8', the corresponding laboratory sample containers 2 comprising the analyzed samples are transported by the sample container transport unit 9 to the second laboratory handling system 100".

Two empty racks 1 are placed on the rack placement unit 3 of the second laboratory handling system 100". The camera of the rack sensing unit 4 of the second laboratory handling system 100" takes a picture of the rack placement unit 3 and of the racks 1 being placed on the rack placement unit 3. The rack sensing unit 4 analyses the type of the racks 1 including the barcodes and the positions of empty container supports 12 of the racks 1 being placed on the rack placement unit 3. Here, the rack 1 having the barcode 14" is intended to receive laboratory sample containers 2 containing samples for which a blood analysis has been performed and the rack 1 having the barcode 14"' is intended to receive laboratory sample containers 2 containing samples for which a urinalysis has been performed.

The gripper 5 of the second laboratory handling system 100" is adapted to remove laboratory sample containers 2 from the container supports 13 of the sample container carriers 10 and to insert these laboratory sample containers 2 in the container supports 12 of the racks 1 being placed on the rack placement unit 3.

The control unit 6 of the second laboratory handling system 100" is adapted to initiate and/or control the removing of laboratory sample containers 2 from the container supports 13, when a laboratory sample container 2 containing a processed sample is transported to the second laboratory handling system 100".

The control unit 6 is adapted to control the gripper 5 for inserting laboratory sample containers 2 comprising blood samples in the empty container supports 12 of the rack 1 having the barcode 14" and to control the gripper 5 for inserting laboratory sample containers 2 comprising urine samples in the empty container supports 12 of the rack 1 having the barcode 14"'.

## Claims

1. Laboratory handling system (100, 100', 100"), comprising:
- a number of racks (1), wherein a respective rack (1) is adapted to carry a number of laboratory sample containers (2),
- a rack placement unit (3), wherein at least one of the number of racks (1) is placed on the rack placement unit (3),
- a rack sensing unit (4), wherein the rack sensing unit (4) is adapted to sense a position and/or a type of the rack (1) being placed on the rack placement unit (3),
- a handling unit (5), wherein the handling unit (5) is adapted to insert laboratory sample containers (2) in the rack (1) being placed on the rack placement unit (3) or remove laboratory sample containers (2) from the rack (1) being placed on the rack placement unit (3), and
- a control unit (6), wherein the control unit (6) is adapted to control the handling unit (5) in response to the sensed position and/or sensed type of the rack (1) being placed on the rack placement unit (3).

2. Laboratory handling system (100, 100', 100") according to claim 1, further comprising
- a rack coding device (7) having a rack code, wherein the rack coding device (7) is assigned to the rack (1) being placed on the rack placement unit (3), wherein the rack code determines a type of processing of samples being comprised in the laboratory sample containers (2) to be inserted in the rack (1) being placed on the rack placement unit (3) or to be removed from the rack (1) being placed on the rack placement unit (3),
- wherein the rack sensing unit (4) is adapted to sense the rack code of the rack coding device (7) assigned to the rack (1) being placed on the rack placement unit (3).

3. Laboratory handling system (100, 100', 100") according to claim 2, **characterized in that**
- the control unit (6) is adapted to control the handling unit (5) in response to the sensed rack code of the rack coding device (7) assigned to the rack (1) being placed on the rack placement unit (3).

4. Laboratory handling system (100, 100', 100") according to anyone of the preceding claims, **characterized in that**
- the rack coding device (7) comprises a label and/or an RFID tag.

5. Laboratory handling system (100, 100', 100") according to anyone of the preceding claims, **characterized in that**
- the rack sensing unit (4) comprises a camera and/or an RFID reader.

6. Laboratory handling system (100, 100', 100") according anyone of the preceding claims, **characterized in that**
- the handling unit (5) is a gripper.

7. Laboratory handling system (100, 100', 100") according anyone of the preceding claims, **characterized in that**
- the rack sensing unit (4) is adapted to sense positions of laboratory sample containers (2) located in the rack (1) being placed on the rack placement unit (3) and/or is adapted to sense empty inserting positions of the rack (1) being placed on the rack placement unit (3) for inserting laboratory sample containers (2).

8. Laboratory automation system (200), comprising
- a number of laboratory handling systems (100, 100', 100") according to anyone of the preceding claims, and
- a number of laboratory stations (8, 8') functionally coupled to the number of laboratory handling systems (100, 100', 100"), wherein at least one of the laboratory stations (8, 8') is adapted to perform a type of processing of samples being comprised in the laboratory sample containers (2).

9. Laboratory automation system (200) according to claim 8, further comprising
- a sample container transport unit (9) being adapted to transport laboratory sample containers (2) between the number of laboratory stations (8, 8'), wherein the sample container transport unit (9) comprises a number of sample container carriers (10), wherein the handling unit (5) of a respective laboratory handling system (100, 100', 100") is adapted to insert laboratory sample containers (2) into the sample container carriers (10) and/or is adapted to remove the laboratory sample containers (2) from the sample container carriers (10).

10. Laboratory automation system (200) according to claim 9, **characterized in that**
- the sample container transport unit (9) comprises a conveyor (11), wherein the sample container carriers (10) are attached to the conveyor (11 ).
